(19) Europäisches Patentamt
European Patent Office
Office européen des brevets

(11) **EP 4 495 543 A1**

(12) **EUROPEAN PATENT APPLICATION**
published in accordance with Art. 153(4) EPC

(43) Date of publication:
**22.01.2025 Bulletin 2025/04**

(21) Application number: **22896824.4**

(22) Date of filing: **16.12.2022**

(51) International Patent Classification (IPC):
***G01B 17/02*** (2006.01)       ***G01C 13/00*** (2006.01)
***G01F 23/2962*** (2022.01)       ***G01S 15/88*** (2006.01)

(52) Cooperative Patent Classification (CPC):
**G01B 17/02; G01C 13/00; G01F 23/2962;
G01S 15/88**

(86) International application number:
**PCT/JP2022/046325**

(87) International publication number:
**WO 2023/176072 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.03.2022 JP 2022038910**

(71) Applicant: **Jinzaikaihatsu-Sienkikou Co., Ltd.
Nagoya-city, Aichi 450-0002 (JP)**

(72) Inventors:
• **NOGUCHI Yoshio
Nagoya-city
Aichi
4500002 (JP)**
• **TOMINAGA Akihiro
Nagoya-city
Aichi
4580021 (JP)**

(74) Representative: **Cabinet Bleger-Rhein-Poupon
4a rue de l'Industrie
67450 Mundolsheim (FR)**

(54) **SLUDGE THICKNESS MEASUREMENT METHOD AND SLUDGE THICKNESS MEASUREMENT DEVICE**

(57)    [Problem] To provide a sludge thickness measuring method and a sludge thickness measuring device capable of measuring depths of a surface and a bottom surface of a sludge layer by transmitting and receiving ultrasonic waves of a single wavelength.

[Solution] A distance from a transmitter/receiver to an outer edge of an irradiation radius at a presumed surface depth of a sludge layer is set to be shorter than a distance from the transmitter/receiver to an irradiation center at a presumed bottom depth of the sludge layer, and ultrasonic waves with a frequency that reflect on a surface and a bottom surface of the sludge layer are transmitted and received. Bottom surface reflected waves that are reflected from the center of the sludge layer bottom surface are delayed from surface reflected waves that are reflected from the outer edge of the irradiation range on the sludge layer surface. Thus, a sludge layer thickness can be estimated with the transmission of the ultrasonic waves with the single frequency.

Fig. 4(A)

Fig. 4(B)

EP 4 495 543 A1

**Description**

TECHNICAL FIELD

The present invention relates to a sludge thickness measuring method and a sludge thickness measuring device for rivers and the like. In more detail, the present invention relates to a sludge thickness measuring method and a sludge thickness measuring device for causing one ultrasonic transmitter/receiver to transmit and receive ultrasonic waves to measure a surface depth and a bottom depth of a sludge layer. Additionally, the present invention relates to a sludge thickness measuring device comprising a small-scale crewless catamaran unnecessary to be boarded by a crew and capable of acquiring sludge layer information comprising the surface depth and the bottom depth of the sludge layer together with accurate latitude and longitude information.

BACKGROUND ART

The bottom sediment sludge layer (hereinafter referred to as the sludge layer) containing pollutants piles up over the sand layer or base rock layer, which forms the bottom of rivers, dam lakes, lakes, reservoirs, canals, or ports (hereinafter referred to as rivers and the like). With the sludge layer being piled up, not only the habitat environment of fish and shellfish deteriorates, but also deterioration in the water quality or a bad smell is caused in canals; deterioration in the water quality of discharged water is caused in dam lakes; the accumulation inhibits port functions such as the ship sailing in ports; holding necessary agricultural water becomes difficult in reservoirs; or flood control functions cannot be maintained.

The accumulated sludge layer does not naturally disappear and can be removed only by dredging. In order to maintain the water quality of rivers and the like in good condition, dredging must be done efficiently, and the sludge layer thickness must be measured periodically beforehand. Conventionally, the layer thickness of the accumulated layer in the rivers and the like was measured by crew members boarding the inspection ship pushing a rod body into the bottom.

In Patent Document 1, a technology of sludge layer survey apparatus is disclosed, in which the sludge layer thickness is measured by transmitting high-band ultrasonic waves of 100kHz and 90kHz simultaneously from two ultrasonic transmitters/receivers. It is said that the interaction of the two ultrasonic waves generates inside water low-band ultrasonic of 10kHz, "the difference component" of the ultrasonic waves, which makes it possible to generate the ultrasonic signal with sharp directivity, to make the size of the ultrasonic transmitter smaller, and to eliminate deviation of transmitting point as well.

According to the technology, the wide-band ultrasonic waves of "the sum component" reflect at the surface depth of the sludge layer for measuring the depth from the water surface to the sludge layer surface, and the 10kHz low-band ultrasonic waves of "the difference component" pass through the sludge layer and reflect at the bottom depth, whereby the thickness of the sludge layer (hereinafter referred to as sludge thickness)can be measured. However, in order to extract and correct the reflected waves of the two-kind ultrasonic waves by filtering, amplification corresponding to each ultrasonic wave should be performed and repeated until the recordable level is reached. Therefore, there is a problem that errors are likely to occur.

In Patent Document 2, high-band ultrasonic waves and different band ultrasonic waves different from the said ultrasonic waves by the frequency $\Delta$ are simultaneously transmitted from one ultrasonic transmitter/receiver, and the reflected waves with two bands caused by the high-band ultrasonic waves and the low-band ultrasonic waves generated by the interaction of the two ultrasonic waves are received by the one ultrasonic transmitter/receiver, and the thickness of the sludge layer is measured by separating and amplifying them. According to the technology, although an ultrasonic transmitter/receiver to generate only low-band ultrasonic waves became unnecessary, there was a problem that time errors occurred in the propagation timing of the ultrasonic signals.

A technology to equip a delay circuit to eliminate the time errors in the propagation timing is disclosed in Patent Document 3. However, in order to measure the time to be delayed by the delay circuit, the rigid body should be placed in the water beforehand, and the signals of high-band ultrasonic waves and low-band ultrasonic waves reflected on the rigid body need to be measured beforehand, which caused the problem that labor and time are necessary.

In Patent Document 4, a technology of measurement system is disclosed, which identifies the location of a survey ship by a ground base station and a GPS (Global Positioning System) positioning device on board the survey ship, and measures the water depth by transmitting 200kHz ultrasonic waves from the ultrasonic transmitter/receiver and stores the location information, the depth information, and the time information as one unit in the storage device. According to the technology, in the case of measuring the bottom sediment quality of the lake bottom together, it is said to be appropriate to transmit ultrasonic waves of 2kHz to 12kHz from the measurement device for the bottom sediment quality different from the ultrasonic transmitter/receiver.

According to the technology, the ground base station is inevitable in addition to the survey ship to correct the errors of location information of the GPS positioning device on board the survey ship, which makes the measurement system large-scale. Moreover, to measure the thickness of the sludge layer, the ultrasonic waves having different wavelengths respectively need to be transmitted from the two devices producing ultrasonic waves, causing a problem that the system became complicated.

According to the technology described in Patent Document 1 to Patent Document 4, in order to survey the condition of the water bottom, ultrasonic waves with two kinds of wavelength are used, and complex processing such as amplifying or delaying processing becomes necessary, causing the problem that the measuring system becomes complicated. Therefore, the inventor of the present invention seriously investigated the measuring means, in which even with only one ultrasonic transmitter/receiver, the sludge layer thickness could be measured so that the measurement system did not become complicated and reached the present invention.

CITATION LIST

PATENT DOCUMENT

Patent Document 1: Japanese Unexamined Patent Application Publication No. Sho 60-192281
Patent Document 2: Japanese Unexamined Patent Application Publication No. Sho 59-147257
Patent Document 3: Japanese Unexamined Patent Application Publication No. Sho 60-85381
Patent Document 4: Japanese Unexamined Patent Application Publication No. Hei 10-300467

OUTLINE OF INVENTION

PROBLEM TO BE SOLVED BY THE INVENTION

The inventor of the present invention takes it as a problem to provide a sludge thickness measuring method and a sludge thickness measuring device, which can measure the depth of the surface and bottom of a sludge layer by causing the single ultrasonic transmitter/receiver to transmit and receive ultrasonic waves.

MEANS FOR SOLVING THE PROBLEM

The first invention of the present invention among sludge thickness measuring methods to measure the sludge thickness by causing the transmitter/receiver provided on the water surface to transmit and receive ultrasonic waves is characterized as follows: as for the transmitter/receiver, the distance from the outer edge of the irradiation radius at the presumed surface depth of the sludge layer to the transmitter/receiver is shorter than the distance from the irradiation center at the presumed bottom depth of the sludge layer to the transmitter/receiver, and also, a single transmitter/receiver which transmits and receives ultrasonic waves with a single frequency that reflect not only on the surface of the sludge layer but also on the bottom surface of the sludge layer is selected; the said single transmitter/receiver transmits and receives ultrasonic waves of the said frequency; the phenomenon is confirmed by receiving ultrasonic waves transmitted from the said single transmitter/receiver by the said single transmitter/receiver that while the intensity of the surface reflected waves received from the said surface increases gradually and decreases gradually after passing the inflection point, the intensity of the bottom surface reflected waves received from the said bottom surface increases gradually and decreases gradually after passing the inflection point; the depth of the gradual increase starting point in the said surface reflected waves is defined as the said surface depth, and the depth of the gradual increase starting point in the said bottom surface reflected wave as the said bottom depth, and the said sludge thickness is estimated from the difference between the said surface depth, and the said bottom depth.

As for the ultrasonic transmitter/receiver, responding to canals, reservoirs, and dam lakes with accumulated sludge, the water depth to the water bottom, i.e., the surface depth of the sludge layer, is presumed to be such as about 5 m or about 30 m of the approximate water depth, and the approximate ratio of the sludge thickness to the surface depth is presumed to be such as 10 % or 100 %. And the transmitter/receiver may be selected as having an irradiation angle in which the distance from the outer edge of the irradiation radius of the ultrasonic waves on the surface depth to the transmitter/receiver is shorter than the distance from the irradiation center of the ultrasonic waves on the bottom depth of the sludge layer to the transmitter/receiver.

In the results of experiments in a brackish lake bordering the sea, and a canal, using a single transmitter/receiver that transmits ultrasonic waves with a specified frequency, reflected waves from the surface and the bottom surface of the sludge layer are measured. As for the frequency reflecting not only on the surface of the sludge layer but also on the bottom surface, it is publicly known, according to the disclosure of Patent Document 1 and others, that 10 kHz or less is appropriate. However, there was the problem that making the frequency 10 kHz or less made the transmitter/receiver large.

Therefore, the inventor of the present invention tried measuring the water bottom using two kinds of ultrasonic transmitters/receivers with frequencies of 28 kHz and 50 kHz. While with the transmitter/receiver with 50 kHz frequency, the reflected waves from the sludge layer surface and the reflected waves from the bottom surface were difficult to distinguish, with the ultrasonic transmitter/receiver with 28 kHz frequency, the surface reflected waves from the surface and the bottom surface reflected waves from the bottom surface were distinguished, which led to the present invention.

As for the intensity of reflected waves arriving at the transmitter/receiver, the reflected waves are accumulated from the arrival of the surface reflected waves from the center of the irradiation range on the sludge surface until the arrival of the surface reflected waves from the outer edge of the irradiation range, thus the measured intensity of reflected waves gradually increase. The intensity of the bottom surface reflected waves from the sludge bottom surface is similar too.

Meanwhile, when the distance from the bottom surface of the sludge layer is larger than the distance from the outer edge of the irradiation radius on the surface depth of the sludge layer to the transmitter/receiver, there is a time lag since the surface reflected waves reflect on the outer edge on the sludge surface until the bottom surface reflected waves from the center of the sludge bottom surface arrive. Thus, the phenomenon where the intensity of the surface reflected waves from the sludge surface gradually increases, and gradually decreases after passing the inflection point is measured. By confirming this phenomenon, the height of the surface and the height of the bottom surface of the sludge layer are estimated.

According to the sludge thickness measuring method of the first invention, favorable effects in that depths of the surface and the bottom surface of the sludge layer can be estimated even by transmitting and receiving ultrasonic waves with a single frequency, and measurement of sludge thickness is possible and easy even with a single transmitter/receiver are achieved.

The second invention of the present invention is the sludge thickness measuring method of the first invention and is further characterized as follows: comparing the first time from the transmission of the ultrasonic waves to the gradual increase starting point in the intensity of the received surface reflected waves and the second time from the gradual increase starting point in the intensity of the received surface reflected waves to the gradual increase starting point in the intensity of the reflected waves that are received secondary waves caused by re-reflection of the said surface reflected waves returned to the water surface; the said surface depth is determined based on approximation between the first time and the second time, and the estimated sludge thickness is determined to be the correct thickness of the sludge layer.

The ultrasonic waves reflect on the sludge surface, and the ultrasonic waves that return to the water surface reflect at the location of the transmitter/receiver and go to the water bottom, becoming the secondary waves. The secondary waves again reflect on the sludge surface, and the gradual increase in the intensity of the secondary waves is measured by the transmitter/receiver. The gradual increase starting point in the secondary waves is the distance equivalent to two roundtrip distances from the ultrasonic transmission to the surface of the sludge layer; thus, the surface depth of the sludge layer is determined based on approximation between the first time and the second time, and the estimated sludge layer can be determined to be the correct sludge thickness. The approximation is not necessarily limited to a match due to the effect of growth, etc. in the water, and an error of 20 to 40 % is allowable.

With the repetition of the reflection between the ultrasonic transmitter/receiver and the surface of the sludge layer, attenuation or noises tend to occur, and it is appropriate to determine the surface depth of the sludge layer by the reflection of the secondary waves. According to the second invention, the surface depth of the sludge layer estimated by the first invention is endorsed, causing a favorable effect in that the sludge thickness estimated using ultrasonic waves with a single frequency can be determined to be the correct sludge thickness.

The third invention of the present invention in sludge thickness measuring devices to measure the sludge thickness by causing a transmitter/receiver provided on the water surface to transmit and receive ultrasonic waves is characterized as follows: a sludge layer bottom confirmation means and a sludge thickness estimation means are comprised; the said transmitter/receiver is a single transmitter/receiver capable of transmitting and receiving ultrasonic waves with a single frequency; the irradiation angle of the said transmitter/receiver is set at an angle where the distance from the outer edge of the irradiation radius at the presumed surface depth of the sludge layer to the transmitter/receiver is shorter than the distance from the irradiation center at the presumed bottom depth of the sludge layer to the transmitter/receiver, and also, the frequency of the said transmitter/receiver is set in a frequency that reflects not only on the surface of the sludge layer but also on the bottom surface; the said sludge layer bottom confirmation means can confirm the existence of the sludge layer bottom by measuring the phenomenon that while the intensity of the surface reflected waves from the said surface increases gradually and decreases gradually after passing the inflection point, the intensity of the bottom surface reflected waves from the said bottom surface increases gradually and decreases gradually after passing the inflection point, by means of receiving the ultrasonic waves transmitted from the said single transmitter/receiver by the said single transmitter/receiver; the said sludge thickness estimation means defines the depth of the gradual increase starting point in the said surface reflected waves as the said surface depth, defines the depth of the gradual increase starting point in the said bottom surface reflected waves as the said bottom depth of the sludge layer, and enables estimation of the said sludge thickness from the difference between the said surface depth and the said bottom depth.

The sludge thickness measuring device of the third invention is a device to conduct the sludge thickness measuring method of the first invention, and can estimate the sludge thickness with only a single transmitter/receiver, causing an advantageous effect in that the measurement of sludge thickness is easy.

The fourth invention of the present invention is the sludge thickness measuring device of the third invention and is further characterized as follows: a surface depth determination means and a sludge thickness determination means are comprised; the said surface depth determination means can compare the first time from the transmission of the ultrasonic waves to the gradual increase starting point in the intensity of the said surface reflected waves and the second time from the gradual increase starting point in the intensity of the said surface reflected waves to the gradual increase starting point in the intensity of the secondary reflected waves of re-reflection of the said surface reflected waves returned to the water surface; and the said surface depth can be determined by approximation between the first time and the second time, and the said sludge thickness determination means can determine the estimation of the said sludge thickness to be the correct thickness of the sludge layer.

The approximation is not necessarily limited to a match due to the effect of growth, etc., in the water, and an error up to about 20 % is allowable. The sludge thickness measuring device of the fourth invention is a device to conduct the sludge thickness measuring method of the second invention and has a favorable effect in that the sludge thickness estimated using a single transmitter/receiver can be determined to be the correct sludge thickness.

The fifth invention of the present invention is the sludge thickness measuring device of the third or the fourth invention and characterized in that the frequency of the ultrasonic waves is the frequency not exceeding 50 kHz. In the measuring experiments in Lake Hamana described later in Examples, the sludge bottom surface could be recognized with ultrasonic waves of 28 kHz. Depending on the water depth or accumulating condition of the sludge, if the hardness of the sludge layer is soft, ultrasonic waves of 28 kHz or more and less than 50 kHz can be used. According to the fifth invention, there is a favorable effect in that the sludge thickness can be measured even with a frequency of 50 kHz or less.

The sixth invention of the present invention is the sludge thickness measuring device from the third to the fifth invention and characterized in that the said frequency is a frequency of 28 kHz or less. With the sixth invention, the sludge bottom surface can be clearly measured, and it is preferable. And according to Patent Document 1 and the like, since it is known publicly that a sludge bottom surface can be measured by ultrasonic waves with less than 28 kHz, for example, ultrasonic waves from 2 kHz to 10 kHz, it is obvious that the frequency of low-band ultrasonic waves is not limited.

The seventh invention of the present invention is characterized in that the transmitter/receiver described in the third to the sixth invention is boarded in touch with the water surface in the central location of a small-scale crewless catamaran moved by wireless control.

The sludge thickness measuring device can easily transmit ultrasonic waves directly downward from the central portion of the small-scale crewless catamaran; the secondary waves reflect not only on the transmitter/receiver but also on the overall bottom surface of the small-scale crewless catamaran, eliminating reflections from the wavy water surface, the reflected waves of the secondary waves are clearly identified; thereby causing an effect in that the measurement of the secondary waves is easy.

The eighth invention of the present invention, in the sludge thickness measuring device of the seventh invention, is characterized as follows: the said small-scale crewless catamaran is provided with a GPS positioning device; the latitude/longitude information is measured by at least four satellites with an elevation angle of 70 degrees or more; the said latitude/longitude information, the said surface depth, the said bottom depth, and the time information at the time of measuring them are recorded together.

According to the eighth invention, the location is captured by four or more satellites located within an elevated angle of seventy degrees or more close to directly above without being shielded by the surrounding artificial objects. Thus, the accurate latitude/longitude information of the sludge thickness measuring device is measured without any intermission. Because the latitude/longitude information, the said surface depth, and the said bottom depth of the sludge layer are accurately measured, an effect appears that the volume of sludge to be dredged is also accurately figured out. Moreover, since the time information is also recorded together, an effect in that the water level influence caused by the high and low tide is also recorded together is obtained.

EFFECT OF THE INVENTION

- According to the first invention of the present invention, the depths of the surface and the bottom surface of a sludge layer can be estimated even only by transmitting and receiving the ultrasonic waves with a single frequency, and a favorable effect in that the measurement of the sludge layer thickness is both possible and easy even only by the single transmitter/receiver is obtained.
- According to the second invention of the present invention, the surface depth of the sludge layer estimated by the first invention is proved, and an effect in that the sludge thickness estimated by using the ultrasonic waves with a single frequency can be determined to be the correct sludge thickness is obtained.

- According to the third invention of the present invention, the sludge thickness can be estimated with only a single transmitter/receiver, and a favorable effect in that the measurement of the sludge thickness is easy is obtained.
- According to the fourth invention of the present invention, an effect in that the sludge thickness estimated by the single transmitter/receiver can be determined to be the correct sludge thickness is obtained.
- According to the fifth invention of the present invention, an effect in that even with the frequency of 50 kHz or less, the sludge thickness can be measured is obtained.
- According to the sixth invention of the present invention, the sludge bottom surface is clearly measurable and it is appropriate.
- According to the seventh invention of the present invention, the sludge thickness measuring device can easily transmit ultrasonic waves directly downward from the central portion of the catamaran; the secondary waves reflect not only on the transmitter/receiver but also on the overall bottom surface of the catamaran, eliminating reflections from the wavy water surface, the reflected waves of the secondary waves are clearly identified, thereby causing an effect in that the measurement of the secondary waves is easy.
- According to the eighth invention of the present invention, because the latitude/longitude information, the said surface depth and the said bottom depth of the sludge layer are accurately measured, an effect in that the volume of sludge to be dredged is also accurately figured out is obtained. Moreover, since the time information is also recorded together, an effect in that the water level influence caused by the high and low tide is also recorded together is obtained.

BRIEF DESCRIPTION OF DRAWINGS

FIG. 1 is an explanatory drawing of the sludge thickness measuring method (Example 1).
FIG. 2 is an explanatory drawing of the measuring sites in the measuring experiments in Lake Hamana (Example 1).
FIG. 3 is the results of the measuring experiments of the sludge thickness (Example 1).
FIG. 4 is an explanatory drawing of reflected waves (Example 1).
FIG. 5 is an explanatory drawing of the sludge thickness measuring device (Example 1).
FIG. 6 is an explanatory drawing of the small-scale crewless catamaran (Example 2).

BEST MODE(S) FOR CARRYING OUT THE INVENTION

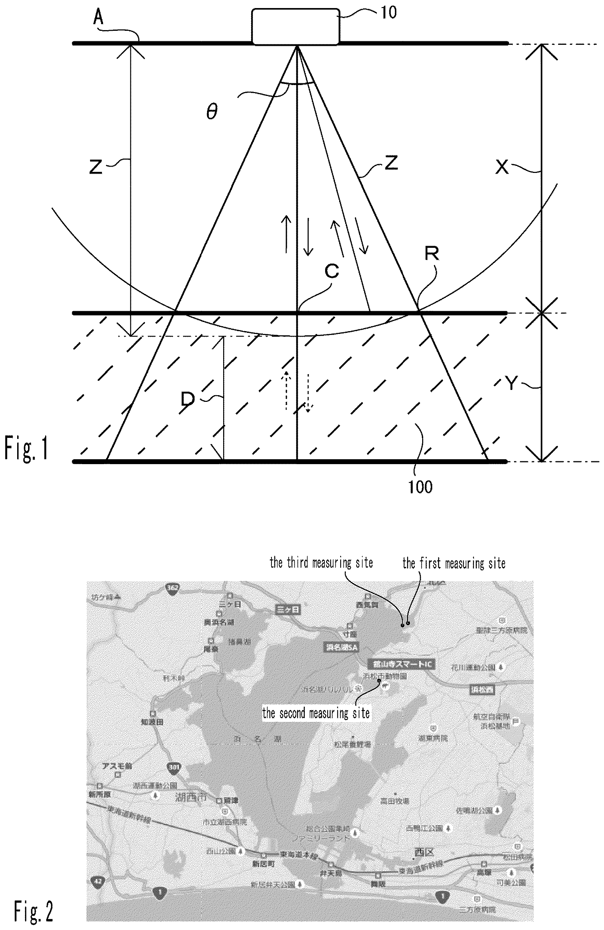

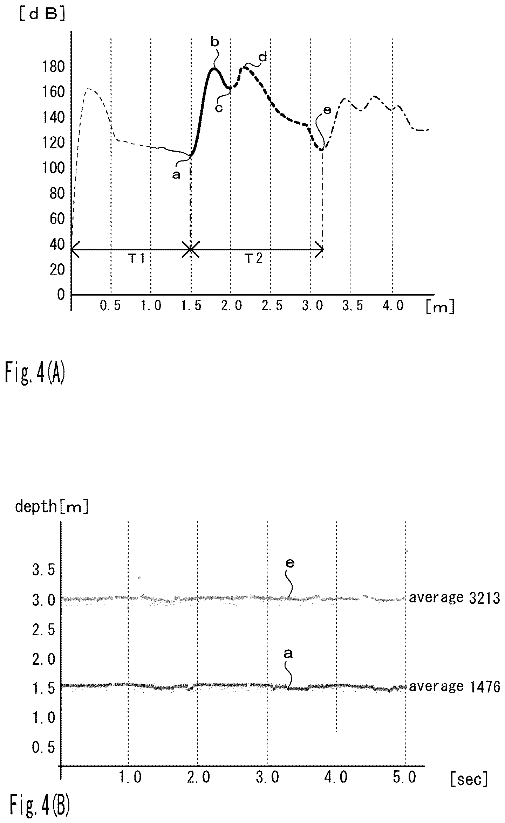

The distance (Z) from the outer edge (R) of the irradiation radius at the presumed surface depth (X) of the sludge layer (refer to FIG. 1) to the transmitter/receiver is shorter than the distance from the irradiation center C at the presumed bottom depth (X+Y) of the sludge layer to the transmitter/receiver, and moreover, using the transmitter/receiver 10 which transmits the ultrasonic waves with a frequency that reflects on the surface and the bottom surface of the sludge layer, the sludge thickness was measured based on the time lag between the reception (a) (refer to FIG. 4) of the surface reflected waves of the sludge layer and the reception (c) of the bottom surface reflected waves.

EXAMPLE 1

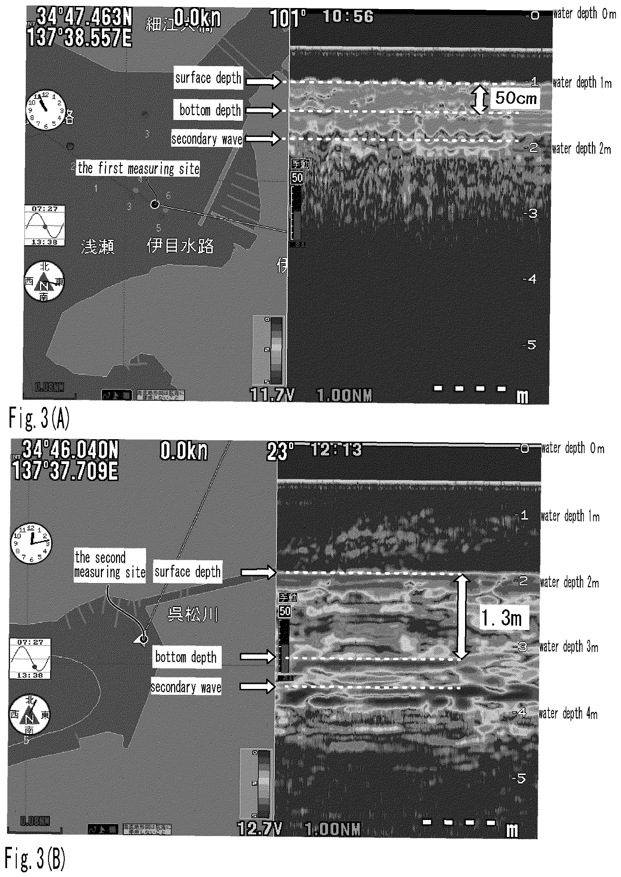

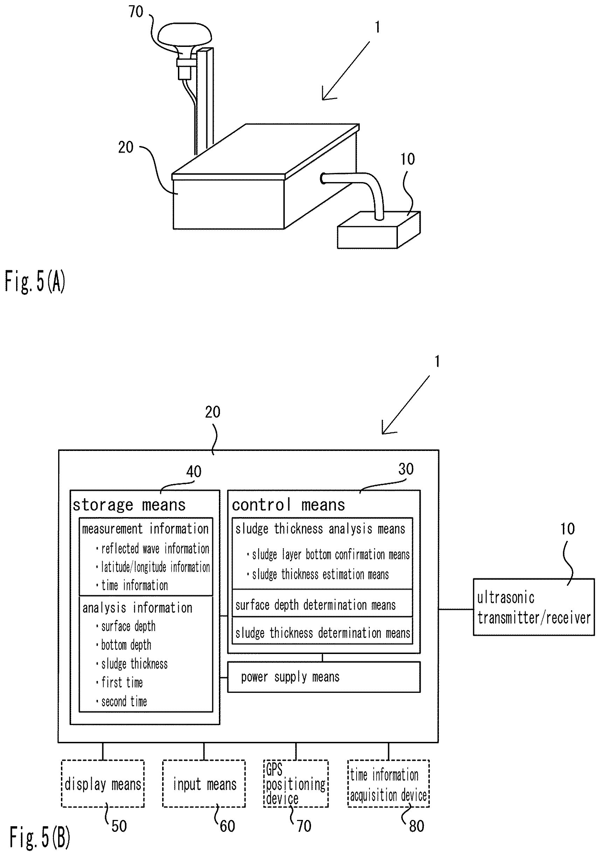

In example 1, the sludge thickness measuring method and the sludge thickness measuring device are explained, referring to FIG. 1 to FIG.5. FIG. 1 shows an explanatory drawing of the sludge thickness measuring method. FIG. 2 shows an explanatory drawing of the measuring sites in the measuring experiments in Lake Hamana. FIG. 3(A) shows the measurement results of the sludge thickness at the first measuring site shown in FIG. 2, FIG. 3(B) shows the measurement results of the sludge thickness at the second measuring site shown in FIG. 2. FIG. 4 shows an explanatory drawing of the reflected waves measured at the third measuring site shown in FIG. 2. FIG. 5(A) shows a schematic drawing of the sludge thickness measuring device 1, and FIG. 5(B) shows a block diagram of the sludge thickness measuring device 1.

Conventionally, for measurement of a sludge thickness, floating a crewed ship on the river, the reservoir, and the like, a depth from the water surface to the surface of the sludge layer (hereinafter referred to as surface depth) and a depth from the water surface to the bottom surface of the sludge layer (hereinafter referred to as bottom depth) are measured by either of the following methods: a person thrusts a measuring rod into the sludge layer and catches a response to the hand or penetrates a tip of the cone to the sludge layer and measures the resistance value in a cone-penetrating test.

As a specific example of a sludge thickness, according to the multiple cone-penetrating tests in Horikawa River in Nagoya City, Aichi Prefecture, conducted on January 12, 2009, the surface depth of about 1.5 m, the bottom depth of about 2.5 m to about 3.0 m were measured, and the measurement result of the sludge thickness was about 1 m to about 1.5 m. With these test results, the proportion of the sludge thickness to the surface depth was about 70 % to 100 %, which was supposed to be a large proportion.

In the place where the sludge thickness exceeds 1 m, which necessitates dredging work, the upper layer side tends to be a soft layer, and the lower layer side tends to be a hard layer. To make ultrasonic waves transmit to the lower layer side and reflect on the sand layer or base rock layer before the sludge was accumulated, it was conventionally believed that a measurement by a low band ultrasonic of about 10 kHz was necessary.

The inventor and others, based on the results of the said investigation, on July 7, 2020, and July 8, the same year, tried measuring tests of the sludge layer by ultrasonic waves with 28 kHz frequency at the measuring sites in Hamana Lake (FIG. 2), Shizuoka Prefecture bordering the sea. In these measuring tests, with the ultrasonic waves of 28 kHz, the surface depth and the bottom depth could be measured by a single frequency. However, in the case that a sludge layer was soft, or in the case that the lower layer of the sludge layer was base rock, etc., and clearly different from the sludge layer in the layer quality, it was judged that even with the case of a frequency less than 50 kHz frequency, the ultrasonic waves could be reflected on the bottom depth of the sludge layer.

The transmitter/receiver may be selected according to the previously presumed sludge thickness in response to measuring objects such as rivers, dam lakes, lakes, reservoirs, canals, or ports. For example, in the case of a dam lake, based on the flood control capacity designed to maintain a normal function of the flowing water, the service water capacity, and the sediment storage capacity, the sludge thickness may be presumed. In the case of a canal, the sludge thickness may be presumed based on the previously mentioned preliminary investigation results, etc.

For the transmitter/receiver of ultrasonic waves, a transmitter/receiver having the predetermined irradiation angle to conform to the presumed surface depth and sludge thickness is selected. The irradiation angle of the ultrasonic waves is an angle at which the ultrasonic waves transmitted from the transmitter/receiver spread; the ultrasonic waves are irradiated so that the range where the irradiation angle is the outer edge is the irradiation range. For example, the irradiation angle may be selected by the directivity angle displayed as an angle at which the intensity of ultrasonic waves attenuates to about 1/2 in the 1 m distance from the transmitter/receiver.

Here, the action of the reflected waves is specifically explained, referring to FIG. 1. The ultrasonic waves transmitted directly downwards from the transmitter/receiver 10 towards the sludge layer 100 go toward the center (C) of irradiation range in the shortest distance and reflect on the surface of the sludge layer (refer to solid arrow). Since as going from the center of the irradiation range toward the outer edge, the reflecting distance gradually increases, and the time at which the transmitter/receiver receives the reflected waves gradually delays; thereby, the intensity of the received reflected waves accumulates and gradually increases from the center (C) to the outer edge (R), and gradually decreases from the inflection point of the outer edge (R) (refer to a to c in FIG. 4 (A)). Similarly, the intensity of the bottom surface reflected waves (refer to dotted arrow) from the bottom surface of the sludge layer also gradually increases and, after passing the inflection point, gradually decreases (refer to c to e in FIG. 4 (A)).

A part of ultrasonic waves transmitted through the inside of the sludge layer 100 reflects on the bottom surface of the sludge layer. With the transmitter/receiver having an irradiation angle, in which the distance (Z) from the outer edge (R) of the irradiation radius at the presumed surface depth X to the transmitter/receiver 10 is shorter than the distance (X+Y) from the irradiation center at the bottom depth of the sludge layer to the transmitter/receiver, the intensity of the reflected waves lowers by the time lag responding to the distance difference (D). When the transmitter/receiver within the range of the irradiation angle ($\theta$) is used, a phenomenon is observed, in which the intensity of the surface reflected waves gradually increases; then, during a gradual decrease after the inflection point (b), the intensity of the bottom surface reflected waves received from the said bottom surface gradually increases, and after passing the inflection point (d), gradually decreases (refer to FIG. 4).

Referring to FIG. 1, the presumed surface depth from the water surface A is (X), the presumed sludge thickness is (Y), and the distance from the outer edge (R) of the irradiation radius at the presumed surface depth (X) to the transmitter/receiver is (Z). To fall in the range of the irradiation angle ($\theta$), it is enough that the said distance (Z) is shorter than the distance (X+Y) from the irradiation center at the presumed bottom depth of the sludge layer to the transmitter/receiver, and the distance (Z) satisfies the relation of two equations shown in the mathematical formula 1 below.

[MATHEMATICAL FORMULA 1]

$$X+Y > Z \qquad Z \times \cos\left(\frac{\theta}{2}\right) = X$$

Assuming the case such as a dam lake in which the sludge thickness is thin relative to the water depth, and the ratio of the sludge thickness (Y) to the surface depth (X) is 5 % to 10 %, and the case such as a canal in which the sludge thickness is thick relative to the water depth, and the ratio of the sludge thickness to the surface depth is 50 % to 100 %, the upper limit angles of the irradiation angle ($\theta$) fitting to these cases based on the above equations are shown in TABLE 1 below.

[TABLE 1]

| Sludge thickness ratio [%] | Irradiation angle θ [deg.] |
|---|---|
| 5 [%] | 35.4 [deg.] |
| 10 [%] | 49.2 [deg.] |
| | |
| 50 [%] | 96. 2 [deg.] |
| 100 [%] | 120. 0 [deg.] |

For a transmitter/receiver of ultrasonic waves, one having a directivity angle of a small angle of 8 degrees to 30 degrees in the case of a transmitter/receiver used mainly in the atmosphere, and one having a wide directivity angle of a wide angle of about 60 degrees in the case for wide-range fish detection inside the water are practically used. According to TABLE1, in the case of the sludge layer ratio being high like rivers and the like where the ratio of sludge layer exceeds 50 %, the directivity angle should be smaller than 96.2 degrees, and most transmitters/receivers including a transmitter/receiver for fish detection can be adopted. Additionally, even in the case of the sludge layer ratio being small like dam lakes where the ratio of sludge layer is in the range of about 5 %, there are many transmitters/receivers with a small directivity angle of less than about 35.4 degrees, and if the transmitter/receiver with a small directivity angle is selected among them, it can be practically used.

Here, the measurement data acquired at multiple measuring sites in Lake Hamana, Shizuoka Prefecture, by transmitting and receiving 28 kHz ultrasonic waves, are explained, referring to FIG. 2, FIG. 3, and FIG. 4. FIG. 2 shows the schematic drawing of measuring sites from the first to the third and Lake Hamana. FIG. 3(A) shows the measurement data acquired on July 7 at 10:56 am at the first measuring site. FIG. 3(B) shows the measurement data acquired on July 7 at 12:13 pm at the second measuring site. FIG. 4(A) shows the measurement test results in the graph conducted on July 8, 2020, at 9:36 am.

In this experiment, the sludge thickness measuring device and the GPS positioning device were on board a ship, and the acquired reflected wave information, the latitude/longitude information, and the time information were recorded together. And in FIG. 3, the left side of the drawing shows a map of the measuring site based on the latitude/longitude information, and also, on the right side of the drawing, the drawing that represents the binarized intensity of reflected waves is shown. The measurement time, the tide level graph of high and low tides, and the direction are shown together on this map. The ultrasonic transmitter/receiver transmitted and received ultrasonic waves 125 times for 5 seconds with an interval of 0.04 seconds, and the measurements were done.

The first measuring site was the site of Lake Hamana at 34 degrees 47.463 minutes north latitude and 137 degrees 38.557 minutes east longitude (refer to FIG. 2 and FIG. 3(A)). The first measuring site was the site in the shallow part of Lake Hamana, about 350 m south-southwest from the mouth of the Miyakoda River that flows in. The surface depth was about 1.0 m, the bottom depth was about 1.5 m, and the thickness of the sludge layer was about 0.5 m. At the same site, a person thrust a measuring rod into the sludge and measured the sludge thickness, and the results were almost the same.

The second measuring site was set at the site of 34 degrees 46.040 minutes north latitude and 137 degrees 37.709 minutes east longitude on Lake Hamana (refer to FIG. 2 and FIG. 3(B)). The second measuring site was the site in the shallow part of Lake Hamana, about 100m south of the mouth of the Kurematsu River that flows in. The surface depth was about 1.8 m, the bottom depth was about 3.1 m, and the thickness of the sludge layer was about 1.3 m. At the second measuring site, too, a person thrust a measuring rod into the sludge and measured the sludge thickness, and the results were almost the same.

Next, the reflected waves of the measurement experiment at the third measuring site indicated in FIG. 2, which was conducted at 9:36 am on the next day of the measurement experiments at the first measuring site and the second measuring site, are explained referring to FIG. 4. The third measuring site was at the site of 34 degrees 47.4626 minutes north latitude and 137 degrees 38.5555 minutes east longitude, and the location apart from the mouth of the Miyakoda River in the southwest direction from the first measuring site (refer to FIG. 2). Due to the influence of high and low tides, at the time of the third measurement, the measurement was done at the tide level of about 0.4 m higher than that of the first measurement experiment conducted the previous day.

FIG. 4(A) shows the intensity of the surface reflected waves (a to c indicated by a solid line), the bottom reflected waves (c to e indicated by a dotted line), and the secondary waves (e ~ indicated by a one-dot chain line) in a line graph, which were measured using the transmitter/receiver with a predetermined irradiation angle and 28 kHz of frequency. In the same drawing, the vertical axis indicates the intensity of the reflected waves, and the horizontal axis indicates the depth, which is the moving distance of the ultrasonic waves.

Additionally, since the transmitter and receiver are placed in parallel in the transmitter/receiver, the depth near the transmitter/receiver where noise is likely to occur is excluded until the depth exceeds 1.0 m (refer to FIG. 4(A)). FIG. 4(B) shows the average value of the surface depth (X: refer to FIG. 1) estimated from the surface reflected waves when measuring the reflected waves multiple times over 5 seconds at the same point (refer to a, in the same FIG.), and the average value of the surface depth for two round trips estimated from the secondary wave (refer to e, in the same FIG.).

According to this experiment result, the phenomenon was confirmed in which the intensity of the surface reflected wave gradually increased (refer to a part a to b indicated by the bold line in FIG. 4 line graph), and while the reflected wave gradually decreased beyond the inflection point (refer to a part b to c indicated by the bold line in FIG. 4 line graph), the bottom surface reflected wave gradually increased (refer to a part c to d indicated by the bold dotted line in FIG. 4 line graph) and gradually decreased beyond the inflection point.

Because the said predetermined irradiation angle was conformed to the surface depth and sludge thickness at the measuring site, good results were obtained in which the said phenomenon was clearly confirmed. Based on this result, the sludge thickness can be estimated by distinguishing between the surface reflected waves and the bottom reflected waves using only a single frequency of ultrasonic waves.

At the third measuring site, the surface depth is estimated to be about 1.5 m from the depth from the ultrasonic wave transmission to the gradually increasing starting point a of the surface reflected waves. The bottom depth is estimated to be about 2.0 m from the depth from the ultrasonic wave transmission to the gradual increase starting point c of the bottom reflected waves. The sludge thickness is estimated to be about 0.5m from this difference.

Meanwhile, due to the influence of high and low tides, the tide level in the measurement experiment at the third measuring site was about 0.4 m higher than the tide level in the measurement experiment at the first measuring site (refer to Fig. 2). Considering this tide level difference, the surface depth was about 1.1 m, and the approximate result of the surface depth of about 1.0 m at the nearby first measuring site was obtained. The bottom depth at the third measuring site considering the tide level, was about 1.6 m, and the bottom depth at the first measuring site was about 1.5 m, also resulting in the bottom depths approximate to each other.

Also, ultrasonic waves were transmitted and received 125 times in 5 seconds for measurement at the third measuring site, too, and the average value was used. Based on the measured secondary waves (one-dot chain line e~ in FIG. 4(A)), whether the first time (refer to T1 in FIG. 4(A)) and the second time (refer to T2 in FIG. 4(A)) are approximate was judged. Specifically, the first time was from the transmission of the ultrasonic waves to the gradually increasing starting point a of the surface reflected waves, that is, the time in which the ultrasonic waves traveled about 1.5 m. In detail, the first time was the time for the ultrasonic waves to travel 1.476 m (refer to a in FIG. 4(B)).

The second time (refer to T2 in FIG. 4(A)) was from the gradual increase starting point a of the surface reflected waves to the gradual increase starting point e of the secondary wave intensity, that is, the time for the ultrasonic wave to travel 1.737 m. In detail, the depth to the gradual increase starting point e in the intensity of the secondary wave was 3.213 m, and subtracting the above 1.476 m, 1.737 m was the time the ultrasonic waves traveled the distance. Although written as the first time and the second time, it is obvious that the moving distance in the first time and the moving distance in the second time can be compared.

At the third measuring site, since the ratio between the first time and the second time was approximately 1.17 times, within the range of approximation, the estimated sludge thickness was determined as the correct sludge thickness, and the estimated surface depth was established as the correct surface depth as well. Meanwhile, since the approximation range is expected to vary due to differences in the original topography shape of the sludge bottom, or differences in layer quality such as softness and hardness of the sludge layer, etc., for example, the approximation range may be set up to 1.2 times to 1.4 times as the upper limit.

Next, the sludge thickness measuring device is explained, referring to FIG. 5. The sludge thickness measuring device 1 includes the ultrasonic transmitter/receiver 10 (refer to FIG. 5). The ultrasonic transmitter/receiver 10 was equivalent to TD87 manufactured by Honda Electronics Co., Ltd., and used as a transmitter/receiver that transmits and receives ultrasonic waves with a frequency of 28 kHz. This transmitter/receiver (TD87) has an ultrasonic output of 3 kW and is capable of transmitting/receiving ultrasonic waves with a selected frequency of either 28 kHz or 55 kHz. In this experiment, the sludge thickness was measured by 28 kHz ultrasonic waves. The vibrator forming the transmitter/receiver was covered around with a rubber mold, and the size was a long side of about 200 mm, a short side of about 150 mm, and a height of about 130 mm.

The main body 20 has control means 30, and storage means 40 (refer to FIG. 5(B)). When analyzing reflected wave information, display means 50 and input means 60 can be connected to the main body, and when conducting measurement, GPS positioning device 70 and time information acquisition device 80 can be connected to the main body. The control means 30 may be a central processing unit. The control means 30 functions as sludge layer bottom confirmation means, and sludge thickness estimation means.

The sludge layer bottom confirmation means may cause the control means to function as determination means to confirm the sludge bottom surface or may provide a display recognizably on a monitor that constitutes the display means 50. For example, the display means 50 is connected to the main body 20 to display the reflected wave information, which may create the condition in which a person can confirm the depth of the bottom surface. As for The sludge thickness estimation means, the surface depth determination means, and the sludge thickness determination means, too, the estimation and determination of the sludge thickness may similarly be performed only by the control means 30 or may be displayed recognizably on the monitor constituting the display means 50.

The storage means 40 may be a storage device such as a hard disk, USB memory, an SD card, etc. For the storage means, as the measurement information, the reflected wave information, the latitude/longitude information, the time information, etc., were integrally stored. Furthermore, as the analysis information, the surface depth, the bottom depth, the sludge thickness, the first time, and the second time, etc., were stored in a discriminable manner.

Although it is not essential to record latitude/longitude information and time information, since in the measurement experiment at Lake Hamana, measurements were conducted at multiple measuring sites (refer to FIG. 2), the GPS positioning device 70 and the time information acquisition device (refer to FIG. 5(B)) are connected to the main body 20, and the latitude/longitude information at the measuring site and the date and time of the measurement were stored in the storage means. If time information can also be obtained by the GPS positioning device 70, the time information acquisition device may be omitted. In this example, a tester boarded a small-scale crewed ship having the sludge thickness measuring device 1 and conducted the experiments.

EXAMPLE 2

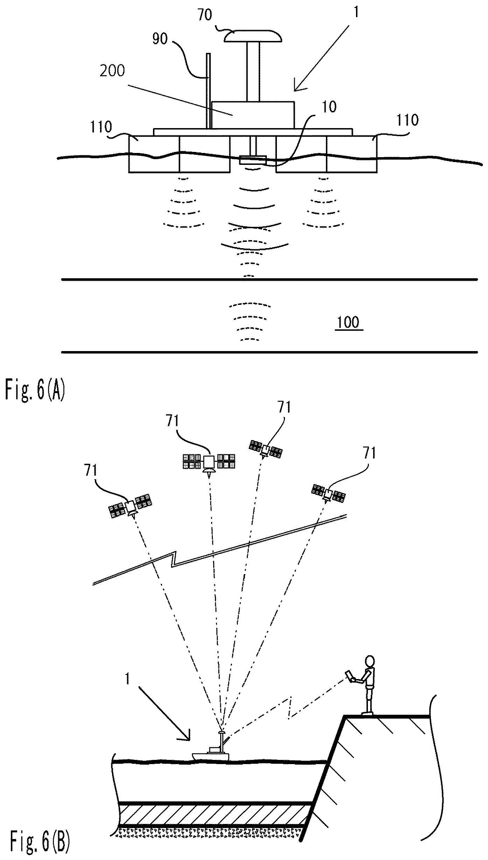

In example 2, an example in which the sludge thickness measuring device 1 is a small-scale crewless catamaran 200 equipped with an ultrasonic transmitter/receiver 10 and a GPS positioning device 70 is described referring to FIG. 6. FIG. 6(A) shows a front view of the small-scale crewless catamaran. FIG. 6(B) shows a state where the measurement site's latitude/longitude information is acquired. In FIG. 6(A), the solid lines indicate the ultrasonic waves transmitted from the transmitter/receiver, the dotted lines indicate the surface reflected waves from the sludge layer surface and bottom surface, and the one-dot chain lines indicate the secondary waves reflected from the bottom surface of the ship.

The small-scale crewless catamaran 200 is equipped with at least drive means (the drawing is omitted) and an ultrasonic transmitter/receiver 10. The receipt information received by the transmitter/receiver 10 may be transmitted to a base station on the ground by a communication means 90 or may be stored in a storage means such as a RAM provided in the small-scale crewless catamaran 200. The small-scale crewless catamaran may be driven while confirming the acquired receipt information by displaying it on a monitor serving as a display means. If the state of the sludge layer is surveyed while checking the receipt information, it is preferable since even the case where an abnormal value occurs can be responded to quickly.

Additionally, if the obtained information is transmitted to the base facility through the communication means 90 and displayed on the monitor, it is superior in that making contrast by comparing it with other accumulated states of sludge layers can be possible. In any case, extending the cruising distance of making measurements is preferable by not loading a monitor or an analysis means, etc., on the small-scale crewless catamaran.

The small-scale crewless catamaran 200 is operated by the radio control device while being checked by an operator (refer to FIG. 6). The small-scale crewless catamaran is a ship in which two fuselages 110 are connected in parallel with the deck, and between both fuselages is a central part space. The deck of the central part space of the fuselages is open, and the transmitter/receiver 10 is hung down from the central part space so as to be in contact with the water surface. The ultrasonic waves transmitted from the transmitter/receiver are directed to the sludge layer directly below and reflected on the surface and bottom surface of the sludge layer.

When the surface reflected waves reflected on the surface of the sludge layer are again reflected toward the sludge layer as the secondary waves, for inhibiting scattering of the secondary waves at the water surface, it is preferable that the bottom surfaces of the fuselages 110 are made substantially flat, and the reflection occurs on the bottom surfaces. The small-scale crewless catamaran 200 is made small so that it can be used for measuring the sludge thickness of a reservoir of the inland region, and it is possible to be mounted on a vehicle and transported. Specifically, the total length of the ship and the width of both fuselages are preferably both within about 1.0 m, but the size is not limited.

The GPS positioning device 70 acquires latitude/longitude information from at least four artificial satellites 71 and obtains the latitude/longitude information with high accuracy (refer to FIG. 6(B)). More specifically, acquiring latitude/longitude information from the centimeter-level positioning augmentation service by the quasi-zenith satellite system provided by the Cabinet Office Space Development Strategy Promotion Secretariat is preferable.

The small-scale crewless catamaran 200 may be automatically navigated by inputting the coordinates of the measuring site in advance, and also, it is obvious that a function for correcting the navigating position may be provided in the case the difference between the coordinates of the measuring site and the acquired latitude/longitude information exceeds a predetermined range. In addition, it is preferable to provide an attitude-controlling device so that the attitude of the hull can be automatically controlled.

(Others)

- In example 1, the example in which the measurement and analysis of the sludge thickness are performed only by the control means provided in the main body was explained, but the sludge thickness measuring device is not limited to this mode. For example, the main body may be equipped with a measuring device and a storage means, only the measurement may be conducted, and the sludge thickness analysis may be performed at a base facility apart from the measuring site. In this case, the storage means may be removed from the main body, connected to a terminal device for analysis placed at the base facility, and the sludge thickness may be analyzed from the measurement information stored in the storage means.
- In the surface depth determination means, although the comparison is made between the first time from the transmission of the ultrasonic waves to the gradual increase starting point in the intensity of the surface reflected waves and the second time from the gradual increase starting point in the intensity of the surface reflected waves to the gradual increase starting point in the intensity of the reflected waves of the secondary waves which are the re-reflection of the surface reflected waves returning to the water surface, it is obviously possible to compare the distances required for the first time and the second time.
- The embodiments disclosed here are illustrative examples in all respects, and it should be considered that the embodiments are not restrictive. The technical scope of the present invention is shown by claims without being restricted to the above explanation, and all modifications are intended to be included in the meaning and range equivalent to the claims.

REFERENCE SIGNS LIST

1 Sludge thickness measuring device,

10 Transmitter/receiver, 20... Main body,

30Control means, 40... Storage means,

50 Display means, 60... Input means

70 GPS positioning device,

80 Time information acquisition device

90 Communication means,

71 Artificial satellite, 100... Sludge layer,

200 Small-scale crewless catamaran,

110 Fuselage

**Claims**

1. A sludge thickness measuring method for measuring a sludge thickness by causing a transmitter/receiver provided on a water surface to transmit and receive ultrasonic waves, the sludge thickness measuring method comprising:

   selecting the single transmitter/receiver that provides a relationship that a distance from an outer edge of an irradiation radius at a presumed surface depth of a sludge layer to the transmitter/receiver is shorter than a distance from an irradiation center at a presumed bottom depth of the sludge layer to the transmitter/receiver, and that transmits and receives ultrasonic waves with a single frequency enabling reflection of the ultrasonic waves not only on a surface of the sludge layer but also on a bottom surface of the sludge layer;
   causing the single transmitter/receiver to transmit and receive the ultrasonic waves with the frequency;

causing the single transmitter/receiver to receive the ultrasonic waves transmitted from the single transmitter/-receiver to confirm a phenomenon that, while intensity of surface reflected waves received from the surface increases gradually and decreases gradually after passing an inflection point, intensity of bottom surface reflected waves received from the bottom surface increases gradually and decreases gradually after passing another inflection point; and

defining a depth of a gradual increase starting point in the surface reflected waves as a surface depth, defining a depth of a gradual increase starting point in the bottom surface reflected wave as a bottom depth, and estimating the sludge thickness from a difference between the surface depth and the bottom depth.

2. The sludge thickness measuring method according to claim 1, further comprising:

comparing a first time from transmission of the ultrasonic waves to the gradual increase starting point in the intensity of the received surface reflected waves with a second time from the gradual increase starting point in the intensity of the received surface reflected waves to a gradual increase starting point in intensity of reflected waves that are received secondary waves caused by re-reflection of the surface reflected waves returned to the water surface;

confirming the surface depth based on approximation between the first time and the second time; and

determining the estimated sludge thickness to be a correct thickness of the sludge layer.

3. A sludge thickness measuring device for measuring a sludge thickness by causing a transmitter/receiver provided on a water surface to transmit and receive ultrasonic waves, the sludge thickness measuring device comprising:

a sludge layer bottom confirmation means; and

a sludge thickness estimation means; wherein

the transmitter/receiver is a single transmitter/receiver capable of transmitting and receiving ultrasonic waves with a single frequency,

an irradiation angle of the transmitter/receiver is set at an angle where a distance from an outer edge of an irradiation radius at a presumed surface depth of the sludge layer to the transmitter/receiver is shorter than a distance from an irradiation center at a presumed bottom depth of the sludge layer to the transmitter/receiver, and also, the frequency of the transmitter/receiver is set at a frequency that enables reflection not only on a surface of the sludge layer but also on a bottom surface,

the sludge layer bottom confirmation means enables confirmation of existence of a sludge layer bottom by measuring a phenomenon that, while intensity of surface reflected waves from the surface increases gradually and decreases gradually after passing an inflection point, intensity of bottom surface reflected waves from the bottom surface increases gradually and decreases gradually after passing another inflection point, by means of receiving the ultrasonic waves transmitted from the single transmitter/receiver by the said single transmitter/receiver, and

the sludge thickness estimation means defines a depth of a gradual increase starting point in the surface reflected waves as a surface depth, defines a depth of a gradual increase starting point in the bottom surface reflected waves as a bottom depth of the sludge layer, and enables estimation of the said sludge thickness from a difference between the surface depth and the bottom depth.

4. The sludge thickness measuring device according to claim 3, further comprising:

a surface depth determination means; and

a sludge thickness determination means, wherein

the surface depth determination means can compare a first time from transmission of the ultrasonic waves to a gradual increase starting point in the intensity of the surface reflected waves with a second time from a gradual increase starting point in the intensity of the surface reflected waves to a gradual increase starting point of intensity of reflected waves of secondary waves caused by re-reflection of the surface reflected waves returned to the water surface,

the surface depth can be confirmed based on approximation between the first time and the second time, and

the sludge thickness determination means can determine the estimated sludge thickness to be a correct thickness of the sludge layer.

5. The sludge thickness measuring device according to claim 3 or claim 4, wherein

the frequency is a frequency of ultrasonic waves not exceeding 50 kHz.

6. The sludge thickness measuring device according to any one of claim 3 to claim 5, wherein
the frequency is a frequency of 28 kHz or less.

7. A sludge thickness measuring device comprising the transmitter/receiver according to any one of claim 3 to claim 6 boarded in touch with the water surface in a central location of a small-scale crewless catamaran moved by wireless control.

8. The sludge thickness measuring device according to claim 7, wherein

the small-scale crewless catamaran is provided with a GPS positioning device, and latitude/longitude information is measured by at least four satellites with an elevation angle of 70 degrees or more, and
the latitude/longitude information, the surface depth, the bottom depth, and time information at the time of measuring them are recorded together.

Fig.1

Fig.2

Fig.3(A)

Fig.3(B)

EP 4 495 543 A1

Fig. 4(A)

Fig. 4(B)

Fig.5(A)

Fig.5(B)

Fig. 6(A)

Fig. 6(B)

## INTERNATIONAL SEARCH REPORT

| | International application No. |
|---|---|
| | **PCT/JP2022/046325** |

### A. CLASSIFICATION OF SUBJECT MATTER

*G01B 17/02*(2006.01)i; *G01C 13/00*(2006.01)i; *G01F 23/2962*(2022.01)i; *G01S 15/88*(2006.01)i
FI:    G01B17/02 Z; G01C13/00 Z; G01F23/2962; G01S15/88

According to International Patent Classification (IPC) or to both national classification and IPC

### B. FIELDS SEARCHED

Minimum documentation searched (classification system followed by classification symbols)

G01B17/02; G01C13/00; G01F23/2962; G01S15/88

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 60-4955 B2 (KAIJO DENKI KK) 07 February 1985 (1985-02-07)<br>entire text, all drawings | 1-8 |
| A | JP 10-300467 A (NORIN SUISANSYO NOGYO KOGAKU KENKYU SHOCHO) 13 November 1998 (1998-11-13)<br>entire text, all drawings | 1-8 |
| A | JP 63-39843 B2 (OKI ELECTRIC IND CO LTD) 08 August 1988 (1988-08-08)<br>entire text, all drawings | 1-8 |
| A | JP 2013-520235 A (MAUI IMAGING INC) 06 June 2013 (2013-06-06)<br>entire text, all drawings | 1-8 |
| A | JP 2000-193747 A (HONDA ELECTRONIC CO LTD) 14 July 2000 (2000-07-14)<br>entire text, all drawings | 1-8 |
| A | JP 11-326514 A (FUJITSU LTD) 26 November 1999 (1999-11-26)<br>entire text, all drawings | 1-8 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **11 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2022/046325** |

**C.      DOCUMENTS CONSIDERED TO BE RELEVANT**

| Category* | Citation of document, with indication, where appropriate, of the relevant passages | Relevant to claim No. |
|---|---|---|
| A | JP 8-105976 A (NIPPON TELEGR & TELEPH CORP <NTT>) 23 April 1996 (1996-04-23)<br>entire text, all drawings | 1-8 |

Form PCT/ISA/210 (second sheet) (January 2015)

**INTERNATIONAL SEARCH REPORT**
Information on patent family members

International application No.

**PCT/JP2022/046325**

| Patent document cited in search report | | | Publication date (day/month/year) | Patent family member(s) | Publication date (day/month/year) |
|---|---|---|---|---|---|
| JP | 60-4955 | B2 | 07 February 1985 | (Family: none) | |
| JP | 10-300467 | A | 13 November 1998 | (Family: none) | |
| JP | 63-39843 | B2 | 08 August 1988 | (Family: none) | |
| JP | 2013-520235 | A | 06 June 2013 | US 2011/0201933 A1 entire text, all drawings KR 10-2013-0010892 A | |
| JP | 2000-193747 | A | 14 July 2000 | (Family: none) | |
| JP | 11-326514 | A | 26 November 1999 | (Family: none) | |
| JP | 8-105976 | A | 23 April 1996 | (Family: none) | |

Form PCT/ISA/210 (patent family annex) (January 2015)

**REFERENCES CITED IN THE DESCRIPTION**

**Patent documents cited in the description**

- JP SHO60192281 A
- JP SHO59147257 A
- JP SHO6085381 A
- JP HEI10300467 A